Europäisches Patentamt

European Patent Office

Office européen des brevets

(11) Veröffentlichungsnummer: **0 516 066 A2**

# EUROPÄISCHE PATENTANMELDUNG

(21) Anmeldenummer: **92108901.7**

(22) Anmeldetag: **27.05.92**

(51) Int. Cl.5: **C08J 3/05**, C09D 5/44

(30) Priorität: **28.05.91 DE 4117417**

(43) Veröffentlichungstag der Anmeldung:
**02.12.92 Patentblatt 92/49**

(84) Benannte Vertragsstaaten:
**AT BE CH DE ES FR GB IT LI NL PT SE**

(71) Anmelder: **Herberts Gesellschaft mit beschränkter Haftung**
**Christbusch 25**
**W-5600 Wuppertal 2(DE)**

(72) Erfinder: **Stransky, Karl-Heinz**
**Lentzestrasse 38**
**W-5600 Wuppertal 2(DE)**
Erfinder: **Collong, Wilfried, Dr.**
**Lindenweg 8**
**W-5632 Wermelskirchen 1(DE)**
Erfinder: **Eder, Manfred**
**Mohrhennsfeld 45**
**W-5600 Wuppertal 21(DE)**
Erfinder: **Patzschke, Hans-Peter, Dr.**
**Am Heckendorn 71**
**W-5600 Wuppertal 2(DE)**

(74) Vertreter: **Türk, Gille, Hrabal, Leifert**
**Brucknerstrasse 20**
**W-4000 Düsseldorf 13(DE)**

(54) **Wässrige Dispersion eines kathodisch abscheidbaren Bindemittels, Verfahren zu deren Herstellung und deren Verwendung.**

(57) Wäßrige Dispersion eines kathodisch abscheidbaren, wärmehärtbaren, kationischen filmbildenden Bindemittels, hergestellt durch Erwärmen einer Aufschlämmung des als Pulver mit einer Teilchengröße von 0,1 bis 1000 $\mu$m und mit einer Glasübergangstemperatur von 35 bis 130°C eingesetzten Bindemittels
    a) in Wasser, falls das Bindemittel kationische Gruppen enthält, oder
    b) in Wasser und Säure, falls das Bindemittel kationische und/oder basische Gruppen enthält,
auf eine Temperatur von 40 bis 90°C, während 5 Minuten bis 5 Stunden, Verfahren zu deren Herstellung und deren Verwendung zur kathodischen Elektrotauchlackierung.

Die Erfindung betrifft wäßrige Dispersionen von kathodisch abscheidbaren, wärmehärtbaren, filmbildenden Bindemitteln zum Beschichten eines als Kathode geschalteten elektrisch leitfähigen Substrats.

Die kathodische Elektrotauchlackierung ist ein bekanntes Verfahren zur Lackierung von elektrisch leitenden Oberflächen, z.B. Oberflächen von Metallen, elektrisch leitenden Kunststoffen und elektrisch leitenden Lackschichten. Das Verfahren wird so durchgeführt, daß die Lackbestandteile aus einem Elektrotauchlackbad auf der Oberfläche eines kathodisch geschalteten Werkstücks mit Gleichstrom ausgefällt werden. Die koagulierten Lackbestandteile werden dann durch Erhitzen auf erhöhte Temperaturen zum Verfließen und zum Vernetzen gebracht. Dadurch entsteht ein homogener glatter Film mit hoher mechanischer und chemischer Beständigkeit. Der Film hat die Aufgabe, das Substrat vor mechanischen Beschädigungen und vor Korrosion zu schützen.

Die Vorgehensweise zum Erzeugen der Elektrotauchlackbäder besteht im allgemeinen darin, daß flüssige oder pastöse wasser- oder lösemittelhaltige Materialien, z.B. Bindemitteldispersionen, Pigmentpasten oder lösemittelhaltige Pigment- und Bindemittelmischungen, zu der Beschichtungsanlage transportiert werden. Dort werden diese Vorprodukte mit Wasser zu dem fertigen Elektrotauchlackbad verdünnt. Nach dem Homogenisieren ist das Elektrotauchlackbad beschichtungsfähig.

Bei dieser Vorgehensweise ist es notwendig, daß auf dem Transport der Bindemittel große Wassermengen und flüssige Bindemittel transportiert werden, da Bindemitteldispersionen nur mit einem relativ geringen Festkörper eine verarbeitungsgerechte niedrige Viskosität besitzen. Bei diesen dünnviskosen Materialien besteht bei einem Transportunfall die Gefahr, daß das umliegende Erdreich verseucht wird. Werden lösemittelhaltige Systeme transportiert, so ist das Transportvolumen geringer und die Viskosität etwas höher, aber aufgrund des hohen Lösemittelgehaltes ist bei einem Transportunfall die Verschmutzung der Umwelt noch schwerwiegender. Auch sind Transporte der großen Mengen Wasser, die nur aus Stabilitäts- und Viskositätsgründen benötigt werden, unwirtschaftlich.

Es sind auch Elektrotauchlackbäder bekannt, die als Bestandteile Pulver enthalten. Es handelt sich dabei jedoch immer um Elektrotauchlackbäder, die zu einem großen Teil noch fließfähige dünnviskose Elektrotauchlackbindemittel enthalten. Die Ausgangsmaterialien werden beim Hersteller mit Wasser vermischt und als Dispersion oder auch als fließfähige Paste zu dem Anwender geliefert und dort mit Wasser weiter verdünnt. Die Transportgefährdung und wirtschaftlichen Nachteile bleiben somit auch bei diesen Systemen bestehen.

In der DE-Offenlegungsschrift 15 71 083 werden Systeme beschrieben, die aus anodisch abscheidbaren flüssigen Bindemitteln und thermoplastischen Kunststoffpulvern bestehen. Aus der Mischung von flüssigem anodischem Bindemittel, vermahlenem Kunststoffpulver, Pigmenten und zusätzlichen Lösemitteln wird nach weiterem Verdünnen mit Wasser das Überzugsmittel hergestellt. In der EP-Offenlegungsschrift 0 052 831 werden kathodisch abscheidbare Elektrotauchlacküberzugsmittel, die aus kathodisch abscheidbarem flüssigem Bindemittel und pulverförmigen ionischen Kunststoffen bestehen, die eine Glasübergangstemperatur > 30°C besitzen, beschrieben. Die Kunststoffe sind fest, aber bei erhöhten Temperaturen schmelzbar, es ist jedoch zur Abscheidung und zur Stabilität der Bäder ein fließfähiges KTL-Bindemittel notwendig.

In der DE-Offenlegungsschrift 22 48 836 werden ebenfalls kathodisch abscheidbare Elektrotauchlack-Überzugsmittel beschrieben, die aus einem oder mehreren kationischen Harzen und einem nicht-ionischen Kunstharzpulver bestehen. Das kationische Harz ist flüssig und enthält gegebenenfalls organische Lösemittel. Das Elektrotauchlackbad wird bei Temperaturen von beispielsweise 30°C beschichtet.

In der DE-Offenlegungsschrift 26 50 611 werden elektrophoretisch abscheidbare Überzugsmittel beschrieben, die aus nichtionischen Kunstharzpulvern, gegebenenfalls Pigmenten und einem wasserlöslichen oder wasserdispergierbaren flüssigen oder in Lösemitteln gelösten Polymeren bestehen. Die daraus hergestellten elektrophoretisch abscheidbaren Lacke werden mit bekannten Verfahren bei Temperaturen zwischen 30° und 35°C abgeschieden.

Diesen allgemein bekannten Zusammensetzungen von elektrophoretisch abscheidbaren Bindemitteln ist gemeinsam, daß sie außer den bei Abscheidebedingungen festen Kunststoffpulvern noch flüssige Bindemittel oder Bindemittellösungen enthalten müssen.

Sie werden entweder in einer Komponente oder in zwei verschiedenen Komponenten zum Anwender transportiert. Diese Komponenten sind aufgrund der notwendigen leichten Mischbarkeit mit Wasser in dünnflüssigem oder pastösem Zustand. Diese Mischungen können entweder in Lösemittelform, d.h. mit einem hohen Gehalt an organischen Lösemitteln, oder in wäßriger Form vorliegen. Auch die wäßrige Form enthält jedoch Anteile von organischen Lösemitteln. Diese fließfähigen Massen müssen beim Transport oder bei notwendigen Umfüllvorgängen besonders sorgfältig behandelt werden, da ein Austreten in die Umgebung schwere Belastungen und Gefährdungen der Umwelt hervorrufen würde.

Ein weiterer Nachteil der bisher bekannten Verfahren liegt darin, daß zum Erreichen einer geeigneten

2

pumpförmigen und dünnflüssigen Konsistenz erhebliche Mengen an organischen Lösemitteln (bis zu 50 %) oder bis zu 70% Wasser benötigt werden. Diese erhöhen das zum Transport notwendige Volumen unnötigerweise. Außerdem ist ein Teil der üblichen verwendeten organischen Lösemittel von nachteiliger Wirkung auf das Elektrotauchlackbad. Gegebenenfalls müssen diese Anteile aus dem Elektrotauchlackbad entfernt werden, um sie später auf eine gefahrlose Art und Weise zu vernichten.

Aufgabe der Erfindung ist die Bereitstellung eines Verfahrens zur kathodischen Elektrotauchlackierung, das mit Bindemitteln durchgeführt werden kann, die sicher und wenig umweltgefährdend sind und mit denen das benötigte Transportvolumen möglichst gering gehalten werden kann.

Diese Aufgabe wird durch ein kathodisch abscheidbares Elektrotauchlackmaterial gelöst, das in Pulverform hergestellt und zum Verbraucher angeliefert wird. Es hat sich gezeigt, daß aus einem solchen pulverförmigen Material nach Dispergieren in Wasser, gegebenenfalls unter Zumischung bekannter Lackadditive, gegebenenfalls unter Zuhilfenahme von Dispergier-Aggregaten, und Erhitzen der wäßrigen Dispersionen Elektrotauchlackbäder hergestellt werden können, die frei von flüssigen filmbildenden Bindemitteln oder Bindemittel-Lösungen sind und zur Elektrotauchabscheidung geeignet sind.

Gegenstand der Erfindung sind daher wäßrige Dispersionen eines oder mehrerer kathodisch abscheidbarer, wärmehärtbarer, kationisch filmbildender Bindemittel, die dadurch gekennzeichnet sind, daß sie hergestellt wurden durch Erwärmen einer Aufschlämmung des oder der als Pulver mit einer Teilchengröße von 0,1 bis 1000 $\mu$m und mit einer Glasübergangstemperatur von 35 bis 130ºC eingesetzten Bindemittel(s)

a) in Wasser, falls die Bindemittel kationische Gruppen enthalten, oder

b) in Wasser und Säure, falls die Bindemittel kationische und/oder basische Gruppen enthalten,

auf eine Temperatur von 40 bis 90ºC, während 5 Minuten bis 5 Stunden. Die erfindungsgemäßen Dispersionen sind im wesentlichen frei von flüssigen oder gelösten Bindemittelharzen und können zum Beschichten eines als Kathode geschalteten elektrisch leitfähigen Substrats verwendet werden. Die Abscheidung aus den als Elektrotauchbäder verwendeten Dispersionen kann bei Temperaturen von 20 bis 80ºC durchgeführt werden.

Durch den erfindungsgemäßen Einsatz von pulverförmigen, kationische Gruppen enthaltenden Bindemitteln besteht die Möglichkeit, den Transport flüssiger oder pastöser Materialien vom Hersteller der Bindemittel zum Anwender und damit bedingte wirtschaftliche Nachteile und Umweltbelastungen zu vermeiden.

Bei den in den erfindungsgemäßen Dispersionen einsetzbaren pulverförmigen Bindemitteln handelt es sich um Harze in Pulverform, die bei Herstellungs- und Transportbedingungen fest vorliegen, bei höheren Temperaturen aber aufschmelzen und einen glatten Film geben. Sie sind als Pulver nicht vernetzt. Sie weisen kationische oder in kationische Gruppen überführbare basische Gruppen auf, wodurch sie bei Temperaturen von 40 bis 90ºC in der Wasserphase dispergierbar sind und stabil bleiben. Die Harze werden im allgemeinen nicht als echte Lösung in der Wasserphase gelöst.

In diesen Pulvern können gegebenenfalls weitere lackübliche Additive und Bestandteile dispergiert sein, z.B. Pigmente, Füllstoffe und Katalysatoren und weitere lackübliche Hilfsstoffe. Außerdem kann die zur Neutralisation notwendige Menge Säure in den Pulvern verteilt sein. Diese Säuren sind üblicherweise organische Säuren, wie z.B. Essigsäure, Ameisensäure, Sulfamidsäure, Benzoesäure oder Milchsäure. Die geringen benötigten Mengen sind problemlos in der organischen Festphase zu dispergieren, so daß sich selbst bei flüssigen Säuren die Pulverform nicht ändert.

Es ist jedoch auch möglich, die pulverförmigen kationische oder basische Gruppen enthaltenden Harze ohne Additive zu bereiten und Pigmente und gegebenenfalls Säuren und weitere Additive und Hilfsstoffe können, falls gewünscht, in Form einer üblichen wäßrigen Pigmentpaste dem Elektrotauchlackbad zugesetzt werden.

Aus dem pulverförmigen Ausgangsmaterial, gegebenenfalls mit einer Pigmentpaste, wird nach Verdünnen mit Wasser, gegebenenfalls unter Säurezusatz, die Dispersion bzw. das Elektrotauchlacküberzugsmittel hergestellt. Hierzu wird eine wäßrige Aufschlämmung, bevorzugt unter ständigem Homogenisieren, beispielsweise durch kräftiges Rühren oder Umpumpen bereitet und auf eine Temperatur von 40 bis 90ºC, bevorzugt über 60ºC erhitzt. Danach ist das Elektrotauchlackbad beschichtungsfähig, wobei die Beschichtungstemperatur zwischen 20 und 80ºC liegt. Es ist möglich, nach der Dispergierung abzukühlen und zur Abscheidung erneut zu erwärmen. Die Elektrotauchlackbäder können mit den üblichen Korrekturmitteln korrigiert werden.

Bei den verwendeten pulverförmigen Harzen handelt es sich um Pulver, die eine Teilchengröße von 0,1 $\mu$m bis 100 $\mu$m, bevorzugt von 2 bis 40 $\mu$m, besitzen. Grobe Pulver mit 100 bis 1000 $\mu$m Korngröße sind auch möglich. Die Teilchengröße der Pulver richtet sich auch nach den Verfahrensmöglichkeiten der Produktion. Feinteilige Pulver neigen zu starker Staubentwicklung beim Einfüllen. Stehen Anlagen zur Verfügung, die eine Ausweitung des Pulverstaubs verhindern, können Pulver mit Teilchengröße 0,1 bis 100 µm verwendet werden. Für die anderen Anlagen empfiehlt es sich, Pulver mit Teilchengröße 100 bis 1000 µm zu verwenden. Eine weitere Möglichkeit, das lästige und gefährliche Stauben (Staubexplosion) zu verhindern, besteht in der Herstellung von Pulver-Slurries, indem z.B. 20 bis 60 Gew.% Pulver mit Teilchengröße von 0,2 bis 15 µm in 80 bis 40 Gew.% entsalztes Wasser eingerührt und in dieser Form zum Anwender, der daraus die Dispersion bereitet, geschickt werden. Die Slurry ist pastös und stark thixotrop, d.h. nicht flüssig, und kann daher bei einem Transportunfall nicht wesentlich in das umliegende Erdreich eindringen. Die pulverförmigen Harze weisen kationische Gruppen oder in kationische Gruppen überführbare basische Gruppen auf, um den pulverförmigen Harzen Dispergierfähigkeit in Wasser zu verleihen. Bei den basischen Gruppen handelt es sich beispielsweise um primäre, sekundäre oder tertiäre Aminogruppen, bei den kationischen beispielsweise um quartäre Stickstoff-, quartäre Phosphor- oder tertiäre Schwefelatome. Diese Gruppen sind fest an das Harz gebunden. Die Harze enthalten auch zu Vernetzungsreaktionen befähigte reaktive Gruppen, wie z.B. OH-Gruppen, blockierte NCO-Gruppen, primäre und/oder sekundäre Aminogruppen, SH-Gruppen, umesterungsfähige Gruppen oder über Michael-Addition vernetzbare Gruppen. Die vernetzungsfähigen Gruppen können einzeln oder im Gemisch vorliegen.

Damit die pulverförmigen Substanzen eine ausreichende Lagerstabilität besitzen, sollen die Pulver nicht zusammenkleben. Hierzu trägt die hohe Glasübergangstemperatur (gemessen nach der Differential Scanning Methode,DSC) der Pulver von über 35°C, bevorzugt über 45°C, bei. Damit die Pulver beim Einbrennvorgang verfließen und eine glatte Oberfläche geben, ist die Obergrenze der Glasübergangstemperatur bei 130°C, bevorzugt bei 100°C, anzusetzen.

Das Kleben der Pulver kann beispielsweise auch durch eindispergierte Pigmente vermieden oder verringert werden. Eine andere Möglichkeit besteht darin, daß die vermahlenen Bindemittelpulver an der Oberfläche mit nichtklebenden organischen oder anorganischen Additiven behandelt werden. Beispielsweise können die Pulver mit hochdisperser Kieselsäure an der Oberfläche behandelt werden. Die entstehenden Pulver bleiben während besonders langer Zeit riesel- und lagerfähig.

Als pulverförmige kationische Gruppen oder in kationische Gruppen überführbare Harze können kathodisch abscheidbare Bindemittel oder auch Mischungen davon eingesetzt werden. Diese Bindemittel können selbstvernetzend oder fremdvernetzend sein. Bei fremdvernetzenden Bindemitteln ist es möglich, den Bindemitteln oder Bindemittelmischungen Vernetzer zuzusetzen, um einen chemisch vernetzbaren Film zu erhalten. Der Vernetzungsanteil der Pulver kann ionische Gruppen enthalten. Gegebenenfalls kann er auch frei von ionischen Gruppen sein, solange er nur in geringen Anteilen von kleiner als 40 Gew.%, bezogen auf das gesamte Bindemittelgewicht, eingesetzt wird. Die Bindemittelkomponenten müssen nicht einzeln die angegebenen Glasübergangstemperaturen, Teilchengrößen und ionischen Gruppen aufweisen; es ist ausreichend, wenn die Mischung der filmbildenden Harze oder die Mischung von filmbildenden Harzen und Vernetzern gemeinsam die angegebenen Spezifikationen aufweist.

Bei den Pulvern handelt es sich beispielsweise um Aminoepoxidharze, die aus Polyglycidylethern mit mehr als einer, bevorzugt mindestens 1,5 Epoxidgruppen pro Molekül, nach Umsetzung mit Aminen oder aminogruppenhaltigen Verbindungen erhalten werden. Außerdem sind auch kationische oder basische Gruppen enthaltende Polymerisate aus olefinisch ungesättigten, polymerisierbaren Monomeren möglich. Bevorzugt werden Aminoepoxidharze. Wie erwähnt, enthalten die Bindemittel vernetzungsfähige funktionelle Gruppen, wie z.B. OH-Gruppen, blockierte NCO-Gruppen, primäre und/oder sekundäre Aminogruppen, SH-Gruppen, umesterungsfähige Gruppen oder über Michael-Addition vernetzbare Gruppen, die einzeln oder auch im Gemisch vorliegen können.

Bei den in den Pulvern eingesetzten Harzen handelt es sich bevorzugt um übliche für die kathodische Elektrotauchlackierung vorgesehene Harze, wie sie bisher in flüssigen Systemen, z.B. als Lösungen oder Dispersionen, eingesetzt wurden. Die Pulver können aus den flüssigen Systemen durch Entfernen der Lösemittel, z.B. durch Destillation und gegebenenfalls anschließendes Vermahlen, hergestellt werden. Sie können auch in Schmelze hergestellt und nach dem Abkühlen vermahlen werden. Beispiele für in den Pulvern eingesetzte Basisharze sind Aminoepoxyharze oder Aminogruppen enthaltende durch Polymerisation von ungesättigten Monomeren erhaltene Harze. Die Harze weisen bevorzugt eine Aminzahl von 45 bis 120 mg/g KOH und eine Hydroxylzahl von 50 bis 400 mg/g KOH auf.

Beispiele für die in den Pulvern eingesetzten Basisharze sind in der EP-Offenlegungsschrift 0 082 291, EP-Offenlegungsschrift 0 234 395 oder der EP-Offenlegungsschrift 0 209 587 beschrieben. Die dort in organischen Lösemitteln gelöster Form hergestellten Harze können durch Entfernen der Lösemittel, z.B. durch Destillation (z.B. in einem Dünnschichtverdampfer), und anschließendes Vermahlen in Pulver umgewandelt werden. Es sind Aminoepoxidharze auf Basis von Glycidylethern mit mehr als einer Epoxidgruppe pro Molekül, bevorzugt auf Basis von Bisphenol A oder Novolak, die übliche primäre, sekundäre und/oder tertiäre Aminogruppen enthalten. Die Aminzahl liegt im allgemeinen zwischen 45 bis 120. Über die Aminzahl ist die Dispergierbarkeit der Harzpulver zu beeinflußen, außerdem wird auch die Güte der Oberfläche des vernetzten Lackfilms beeinflußt. Ist die Aminzahl zu gering, so sind die Harze nicht ausreichend zu dispergieren und bilden keine stabile Dispersion. Ist die Aminzahl zu hoch, so wird eine schlechte Oberfläche mit einem mangelhaften Korrosionsschutz erhalten. Diese Harze weisen neben Aminogruppen auch OH-Gruppen auf. Die Hydroxylzahl liegt bevorzugt bei 50 bis 500. Zusammen mit den reaktiven Aminogruppen sind reaktive Hydroxylgruppen für eine Vernetzung mitverantwortlich. Ihre Anzahl beträgt bevorzugt mindestens zwei, besonders bevorzugt mindestens vier, pro Molekül. Ist der Vernetzungsgrad der aus den Pulvern gebildeten Filme zu gering, so zeigen die Filme nach der Vernetzung schlechte mechanische Eigenschaften. Ist der Vernetzungsgrad zu hoch, so werden die vernetzten Filme spröde.

Weitere funktionelle Gruppen können z.B. durch Umsetzung von OH- oder NH-Gruppen der Harzmoleküle mit Isocyanaten, die die gewünschten funktionellen Gruppen enthalten, eingeführt werden. Werden übliche halbverkappte Diisocyanate als Reaktionskomponente eingesetzt, so entstehen über verkappte Isocyanatgruppen selbstvernetzende Bindemittel. Weitere funktionelle Gruppen können z.B. auch über (Meth)acrylsäurederivate eingeführt werden. Die entstehenden Bindemittel enthalten dann $\alpha,\beta$-ungesättigte Carbonylgruppen. Gegebenenfalls können die Bindemittel mit weiteren funktionellen Gruppen modifiziert werden. Ein anderes Syntheseverfahren ist beispielsweise in der EP-0 052 831, Beispiel 3 beschrieben. Dort werden funktionalisierte Aminoepoxidharze lösungsmittelfrei in fester Form hergestellt. Dabei werden z.B. Epoxidharze in der Schmelze mit Aminoalkoholen umgesetzt und in der Schmelze gegebenenfalls nach dem Erstarren zu Pulvern weiterverarbeitet.

Weitere Beispiele für die in den Pulvern einsetzbaren vernetzungsfähigen Bindemittel sind beispielsweise auch in der EP-Offenlegungsschrift 0 261 385 beschrieben. Auch hier handelt es sich um in organischen Lösungsmitteln gelöste Harze, die wie vorstehend beschrieben in Pulver überführt werden können. Es sind Polymere, die durch Polymerisation von radikalisch polymerisierbaren ungesättigten Monomeren erhältlich sind, die zumindest zum Teil zur Löslichkeit oder Vernetzung geeignete funktionelle Gruppen aufweisen. Beispielsweise können eingesetzt werden gesättigte, lineare oder verzweigte Acryl- oder Methacrylsäureester, Glycidyl(meth)acrylate, Allylglycidylether, Vinylether, Styrol, Hydroxy(meth)acrylate oder andere funktionalisierte Acrylsäure- und/oder Methacrylsäurederivate. Zur Löslichkeit notwendige Aminogruppen können beispielsweise durch Umsetzen von Epoxidgruppen mit sekundären Aminen oder Aminoalkoholen eingeführt werden, oder über aminogruppenhaltige Verbindungen einpolymerisiert werden.

Über die Art der Monomeren kann die Glasübergangstemperatur beeinflußt werden. Ebenso kann die Anzahl der vernetzungsfähigen Gruppen über die Monomere eingestellt werden.

Wie erwähnt, können die pulverförmigen Harze selbst- oder fremdvernetzend sein. Als Vernetzer geeignete Harze sind z.B. Triazinharze, Alkoxymethyl(meth)acrylamidcopolymerisate, blockierte Isocyanate, umesterungs- oder umamidierungsfähige Harze, Harze mit endständigen Doppelbindungen oder zur Michael-Reaktion fähige Vernetzer geeignet. Vernetzer solcher Art sind in der Literatur geläufig und werden z.B. in der EP-Offenlegungsschrift 0 245 786, DE-Offenlegungsschrift 34 36 345 oder der DE-Offenlegungsschrift 37 12 805 beschrieben. Auch hier handelt es sich um in organischen Lösemitteln gelöste Harze, die wie vorstehend beschrieben in Pulver überführt werden können. Sie können zum Teil auch in Substanz hergestellt und pulverisiert werden. Die Pulver können einheitlich sein oder als Gemische vorliegen. Dabei können die einzelnen Pulverteilchen homogen oder heterogen sein. Gemische können dadurch hergestellt werden, daß vorgefertigte Pulverteilchen miteinander gemischt und gegebenenfalls vermahlen werden. Sie können jedoch auch dadurch hergestellt werden, daß gemischte Lösungen zu lösungsmittelfreien Massen verarbeitet und vermahlen werden. Bevorzugt wird so gearbeitet, daß sämtliche Pulverteilchen ionische Gruppen aufweisen. Wird beispielsweise ein nicht-ionisches Harz eingesetzt, so kann dieses mit einem ionischen Harz zu heterogenen, ionische Ladungen aufweisenden Pulverteilchen verarbeitet werden.

Gelöst in organischen Lösemitteln hergestellte Harze werden in eine lösungsmittelarme oder lösungsmittelfreie Form überführt, wobei eine lösungsmittelarme Form einen Lösungsmittelgehalt aufweist, der ein nichtklebriges Pulver mit einer Glasübergangstemperatur von 35 bis 130°C erlaubt. Es ist aber ebenso möglich die Bindemittel lösungsmittelfrei, z.B. in der Schmelze, herzustellen und dann in ein Pulver zu überführen.

Additive und Pigmente können in den Pulvern enthalten sein. Sie können zu jedem beliebigen Zeitpunkt vor dem Vermahlen zugesetzt werden. Beispielsweise können sie der festen zu vermahlenden Harzmasse zugesetzt oder auch schon einem in Lösung erhaltenen Harz vor der Entfernung des Lösungsmittels zugefügt werden. Nach dem Entfernen des Lösungsmittel werden die gegebenenfalls Additive und Pigmente enthaltenen Harze dann auf einem geeigneten Aggregat auf die nötige Kornfeinheit vermahlen. Dabei muß der Gehalt an Lösemitteln oder flüssigen Bestandteilen so gering sein, daß die entstehenden Pulver nicht verkleben und nach längerer Zeit noch rieselfähig sind. Geeignete Mahlaggregate und Verfahren zum Vermahlen von Pulvern sind bekannt und schon häufig in der Literatur beschrieben.

Zur Neutralisation der Bindemittel bzw. zur Bildung von kationischen Gruppen sind geringe Mengen von organischen oder anorganischen Säuren notwendig, z.B. Ameisensäure, Essigsäure, Milchsäure oder Alkylphosphorsäure. Die verwendeten Säuren können flüssig oder fest sein, beispielsweise Benzoesäure, Sulfamidsäure oder Glycolsäure. Gegebenenfalls können auch mehrbasige Säuren wie Zitronensäure oder Oxalsäure verwendet werden. Auch der Zusatz von Säureanhydriden oder von leicht hydrolisierbaren Estern ist möglich. Beispiele hierfür sind: Essigsäureanhydrid oder Maleinsäureanhydrid oder p-Toluolsulfonsäuremethylester. Wird das Neutralisationsmittel über das Polymerpulver zugegeben, sind feste Neutralisationsmittel bevorzugt.

In die verwendeten ionische Gruppen enthaltenden Polymerpulver können auch geeignete Pigmente eingearbeitet werden. Als Pigmente sind beispielsweise geeignet Titandioxid, Ruß, organische oder anorganische Farbstoffpulver, feinverteilte Füllstoffe, wie z.B. hochdisperse Kieselsäure, pulverförmige Katalysatoren und Korrosionsschutzpigmente, wie z.B. Bleisilikat.

Als Füllstoffe sind auch unter Einbrennbedingungen nicht schmelzbare Polymermikroteilchen geeignet. Bevorzugt werden vernetzte Polymermikroteilchen. Die Polymermikroteilchen sollen bevorzugt keine ionischen Gruppen auf der Oberfläche enthalten. Es ist jedoch nicht ausgeschlossen, daß auch kationische Gruppen an der Oberfläche vorhanden sind. Sie müssen ausreichend vernetzt sein, daß sie nicht mit dem Bindemittel beim Einbrennen verfließen. Die Teilchengröße soll < 20 $\mu$m, bevorzugt < 10 $\mu$m, sein. Sie sind wie übliche Pigmente in das Bindemittel oder die Pigmentpasten einzuarbeiten. Die Polymerteilchen können an der Oberfläche gegebenenfalls funktionelle Gruppen, wie z.B. OH-, SH- oder Estergruppen tragen. Diese können beim Einbrennen mit dem Bindemittel reagieren. Die Polymermikroteilchen können beispielsweise auf Basis von Polyurethanen, Harnstoffen, Polyacrylaten oder Phenolformaldehydharzen hergestellt sein.

Die Pigmente werden auf bekannte Art und Weise in den Bindemitteln fein verteilt. Das kann beispielsweise dadurch geschehen, daß mit einer geeigneten Mischvorrichtung, z.B. einem Extruder, das Bindemittel mit den Pigmenten homogen vermischt wird. Dieses Mischen kann auch durch eine erhöhte Temperatur unterstützt werden. Die Mischung aus Bindemittel und Pigment wird danach mit bekannten Aggregaten zerkleinert und mit einer Mühle auf die notwendige Kornfeinheit vermahlen. Die Pigmentteilchen sind jetzt mit dem Polymerpulver umhüllt und haben eine geeignete Korngrößenverteilung.

Die erfindungsgemäß verwendeten ionische Gruppen enthaltenden pulverförmigen Harze können auch ohne Pigmentzusatz hergestellt werden. In diesem Fall erhält man nach Abscheidung und Einbrennen einen Klarlacküberzug. Eine andere Vorgehensweise ist, daß die Bindemittel als pulverförmige, pigmentfreie Harze dem Elektrotauchlackbad zugesetzt werden und die Pigmente werden über eine getrennte Pigmentzubereitung dem Bad zugesetzt.

Zur Herstellung von Pigmentzubereitungen können übliche Pigmentpasten verwendet werden. Derartige Pigmentpasten werden durch Anreiben von Pigmenten mit Netzmitteln oder sogenannten Pastenharzen (Anreibebindemitteln) hergestellt. Beispielsweise werden in der EP-Offenlegungsschrift 0 183 025 Pastenharze beschrieben auf Basis von Epoxidharzen mit anreagierten Oxazolidinringen. Ebenso wird dort beschrieben, wie aus diesen Bindemitteln zusammen mit üblichen Pigmenten Pigmentpasten hergestellt werden. Die erfindungsgemäß einsetzbaren Pigmentpasten sollen bevorzugt wäßrig sein. Sie können beim Anwender bereitet und den Dispersionen zugesetzt werden.

Die Pastenharze werden in einer Menge von 0 bis 20, bevorzugt 0,5 bis 20 Teilen auf 100 Teile Bindemittelpulver, bevorzugt 2 bis 10 Teile, eingesetzt. Aufgrund der geringen Menge sind sie zur Filmbildung allein nicht ausreichend. Sie können in Wasser löslich oder dispergierbar sein. Sie können ionische Gruppen enthalten oder ohne ionische Gruppen vorliegen. Bevorzugt sollen sie funktionelle Gruppen enthalten, die mit den filmbildenden Harzen reagieren können. Die Anreibebindemittel sollen in wäßriger Dispersion vorliegen und nur geringe Anteile von Lösemittel enthalten.

Bei den Pastenharzen handelt es sich z.B. um Bindemittel auf der Basis von Epoxidharzen, Alkydharzen, Polyurethanharzen oder auf Basis von Polyethern. Außerdem können nichtionische Anreibebindemittel z.B. auf Basis eines linearen oder verzweigten Polyethylenglykols oder eines Polypropylenglykols oder eines Polypropylenglykols mit endständig aufgepfropften Ethylenoxidanteilen hergestellt werden.

Beispiele für Pastenharze werden beispielsweise in der EP-Offenlegungsschrift 0 108 088, EP-Offenlegungsschrift 0 183 025 oder in der EP-Offenlegungsschrift 0 270 877 beschrieben. Es handelt sich um Netzmittel oder Bindemittel, die ein hohes Benetzungsvermögen für Pigmente und Füllstoffe besitzen. Dabei sollen sie gut verträglich mit dem Bindemittel des wäßrigen Überzugsmittels sein und die Eigenschaften der Bindemittelmischung nicht verändern. Sie können gegebenenfalls über funktionelle Gruppen mit dem Bindemittel vernetzen. Diese Pastenharze besitzen basische funktionelle Gruppen, die durch Neutralisation mit Säure die Pastenharze wasserdispergierbar machen. Eine andere Möglichkeit besteht darin, daß an den Pastenharzen anreagiert kationische funktionelle Gruppen vorhanden sind. Solche funktionellen Gruppen sind z.B. quartäre Stickstoffatome, quartäre Phosphoratome oder tertiäre Schwefelgruppen. Über die Anzahl dieser neutralisierten oder ionischen Gruppen wird die Löslichkeit der Anreibebindemittel beeinflußt.

Die Anzahl der kationischen Gruben kann so hoch sein, daß die Pastenharze allein nicht an der Kathode abscheidbar sind, d.h. keinen homogenen gleichmäßigen Film ergeben.

Bevorzugt weisen die Pastenharze funktionelle Gruppen auf, über die sie mit den filmbildenden Harzen vernetzen können; dies sind z.B. primäre oder sekundäre OH-Gruppen, reaktive Aminogruppen, umesterungsfähige Estergruppen oder verkappte Isocyanate, Methylolgruppen, Alkoxymethylgruppen, bevorzugt Methoxymethylgruppen.

Beispiele für einsetzbare Pigmentpastenharze auf der Basis von modifizierten Epoxidharzen sind solche mit mindestens einer, bevorzugt mindestens zwei, Epoxgruppen, wobei 50 bis 100 Mol% der freien Epoxygruppen mit einem primär-tertiären Diamin umgesetzt sind, gegebenenfalls vorher die überschüssigen Epoxgruppen mit sekundären oder primären Amin umgesetzt worden sind und wobei 80 bis 100 Mol% der vorhandenen sekundären Aminogruppen mit einer Carbonylverbindung zu Oxazolidinstrukturen umgesetzt wurden. Diese Bindemittel können unter Zusatz einer Säure in eine wäßrige Dispersion überführt werden. Das Molekulargewicht der modifizierten Epoxidharze soll 400 bis 10000 betragen. Die Hydroxylzahl soll < 150 mg KOH/g betragen, bevorzugt < 100 mg KOH/g. Der Gehalt an organischen Lösemitteln soll < 30 % liegen.

Beispiele für verwendbare nichtionische Pastenharze oder Netzmittel sind in den DE-Offenlegungsschriften 30 18 715, 36 41 699 und 26 06 831 beschrieben. Es handelt sich um nichtionische Harzanteile, die ein gutes Benetzungsvermögen für Pigmente und Füllstoffe besitzen sollen. Sie müssen mit dem Bindemittelsystem des wäßrigen Überzugsmittels gut verträglich sein und sollen die Eigenschaften der Bindemittel oder Bindemittelmischung nicht verändern. Vorteilhaft ist es, wenn diese Anreibebindemittel über funktionelle Gruppen mit dem Bindemittel des wäßrigen Überzugsmittels reagieren können. Diese nichtionischen Pastenharze zeichnen sich durch eine gute Löslichkeit in Wasser aus. Sie sind allein nicht an der Kathode abscheidbar, sondern werden nur zusammen mit dem Bindemittelsystem abgeschieden. Es handelt sich z.B. um Polyalkylenglykole.

Nichtionische Pastenharze können sich aber auch von Epoxidharzen, bevorzugt von aromatischen Epoxidharzen, deren Wasserlöslichkeit über Polyethylenoxid- oder Polypropylenoxidanteile verbessert ist, ableiten und sie können auch nichtionische Netzmittel auf Melamin- oder Phenolharzbasis sein.

Aus den bekannten Pastenharzen können Pigmentpasten hergestellt werden. Beispielsweise kann man so vorgehen, daß zu dem Pastenharz, das gegebenenfalls mit einer Säure neutralisiert und damit wasserdispergierbar gemacht wird, demineralisiertes Wasser zugegeben wird. Zu dieser dünnflüssigen Mischung werden unter einem Rühraggregat Pigmente, Füllstoffe, Katalysatoren, Korrosionsschutzpigmente, anorganische oder organische Farbpigmente und weitere Additive gegeben. Als Additive sind z.B. Entschäumer, Netzmittel, Verlaufsadditive oder Antikratermittel zu verstehen. Nach dem gründlichen Homogenisieren dieser Mischung wird mit voll entsalztem Wasser die Viskosität der Pigmentpaste eingestellt und danach auf einem üblichen Mahlaggregat, z.B. einer Perlmühle, auf die notwendige Kornfeinheit vermahlen. Die entstehenden Pigmentpasten sind wäßrig, pumpbar und weisen eine gute Lagerstabilität auf.

Zur Herstellung der erfindungsgemäß verwendeten Elektrotauchlacküberzugsmittel kann man wie folgt verfahren: Zu der für das Elektrotauchlackbad notwendigen Menge voll entsalztem Wasser wird unter gutem Rühren/Homogenisieren das Polymerpulver langsam eingetragen.

Dabei ist sicherzustellen, daß die Polymerpulver nicht verklumpen, sondern feindispers vorliegen. Im Fall einer wäßrigen, nicht frei fließenden Pulverslurry kann diese über eine Dickstoffpumpe zudosiert werden. Zu dieser Bindemitteldispersion kann gegebenenfalls unter gutem Mischen eine Pigmentpaste zugegeben werden. Die Pigmente können aber auch schon in dem Polymerpulver mitvorhanden sein, oder es ist möglich, daß mit einem pigmentfreien KTL-System gearbeitet wird. Bevorzugt werden die Pigmente im Polymerpulver dispergiert eingesetzt.

Nach dem gründlichen Homogenisieren wird das Elektrotauchlackbad für 5 Minuten bis zu 5 Stunden erwärmt. Ebenso ist es möglich, daß die Homogenisierung direkt bei der Abscheidetemperatur des Elektrotauchbades erfolgt. Die Erwärmungstemperatur liegt bei 40 bis 90ºC, bevorzugt bei 50 bis 80ºC, besonders bevorzugt bei 60 bis 75ºC. Dabei wird das Elektrotauchlackbad kontinuierlich homogenisiert. Es ist bevorzugt die Erwärmungstemperaturen in Anpassung an die Glasübergangstemperatur des eingesetzten Bindemittelpulvers aus dem vorstehenden Bereich zu wählen, d.h. bei niedriger Glasübergangstemperatur eine mittlere Erwärmungstemperatur und bei höheren Glasübergangstemperaturen eine Erwärmungstemperatur aus den oberen angegebenen Erwärmungsbereichen. Die Erwärmungstemperatur sollte so gewählt werden, daß sie nicht über dem Schmelzpunkt des eingesetzten Pulvers liegt.

Wird das Elektrotauchlackbad als Nachfüllkomponente für ein vorhandenes Elektrotauchlackbad eingesetzt, so können die pulverförmige Elektrotauchlack-Bindemittelzusammensetzung und gegebenenfalls die Pigmentpaste auch in dem vorhandenen Elektrotauchlackbad dispergiert werden. Nach Homogenisierung und Erwärmen auf erhöhte Temperatur ist das kathodische Elektrotauchlackbad beschichtungsfähig.

Die Beschichtung mit dem kathodischen Elektrotauchlackbad erfolgt bei 20 bis 80°C, bevorzugt bei 30 bis 60°C. Das Elektrotauchlacküberzugsmittel ist bei diesen Temperaturen stabil und zersetzt sich nicht. Das erfindungsgemäße Verfahren kann beispielsweise insbesondere für die Beschichtung von Industrie-Produkten aus Metall, leitfähigen Kunststoffen und elektrisch leitenden Lackschichten verwendet werden. Die Qualität der Beschichtungen richtet sich nach der Art der Produkte. Für nach diesem Verfahren zu beschichtende Produkte, die nicht dem Wetter ausgesetzt werden, wie z.B. Regale, kann eine andere Pulverqualität verwendet werden als für Autokarosserien. Für Waschmaschinen werden meist Pulver verwendet, die nach dem Härten neben anderen wichtigen Eigenschaften eine gute Laugenbeständigkeit aufweisen. Die Palette der beschichtbaren Industrieprodukte nach dem erfindungsgemäßen Verfahren ist die gleiche, wie sie zur Zeit auf dem Gebiet der Elektrotauchbäder besteht. Nach dem Abscheiden zeigen die Überzüge gute Eigenschaften; Umgriffsverhalten und Haftung zum Untergrund sind gut. Die beschichteten Teile werden auf übliche Art und Weise weiter behandelt, z.B. werden sie abgespült und bei erhöhter Temperatur zum Vernetzen gebracht. Ebenfalls ist eine naß-in-naß Weiterbeschichtung möglich.

Zum erfindungsgemäß verwendeten Elektrotauchlack-Überzugsmittel können übliche Korrekturmittel zugesetzt werden. So kann, falls es nötig ist, Säure nachträglich dem Bad zugefügt werden. Es handelt sich um die oben erwähnten, in der Elektrotauchlackierung üblichen Säuren. Ebenso ist es möglich, Additive zur Vermeidung von Schaum auf dem Elektrotauchlack-Bad zuzusetzen. Ebenso können Verlaufsmittel eingesetzt werden, beispielsweise Fettalkohole mit 12 - 20 Kohlenstoffatomen. Ebenso können Korrekturmittel für die Schichtstärke oder u. U. notwendige Antikrater-Additive, wie z. B. in der DE-OS 40 18 876 beschrieben. Die so erhaltenen kathodisch abscheidbaren Elektrotauchlackbäder ergeben nach dem Vernetzen glatte, gut verlaufende Filme. Die Kanten zeigen gute Eigenschaften in bezug auf Korrosionsschutz oder Witterungsbeständigkeit. Die Steinschlagfestigkeit der Überzüge ist gut.

Die so erhaltenen Überzüge auf metallisch leitenden Substraten können als Einschicht-Überzüge verwendet werden. Ebenso ist es möglich, daß auf diesen Grundierungsschichten weitere Überzüge, wie z.B. Füller oder Decklacküberzüge, aufgebracht werden. Die so zu erhaltenen Einschicht- oder Mehrschichtüberzüge weisen ein gutes Erscheinungsbild auf.

Die Erfindung wird nachstehend anhand verschiedener Beispiele näher erläutert.

Alle Prozentangaben beziehen sich auf Gewichtsprozent.

**Harzbeispiel 1:**

A. Gemäß EP-B-0 012 463 werden 391 g Diethanolamin, 189 g 3-(N,N-Dimethylamino)-propylamin und 1147 g eines Adduktes aus 2 Mol Hexandiamin-1,6 und 4 Mol Glycidylester der Versaticsäure (Cardura E 10) zu 5273 g Bisphenol A-Epoxidharz (Epoxidäquivalentgewicht ca. 475) in 3000 g Ethoxypropanol gegeben. Das Reaktionsgemisch wird 4 Stunden unter Rühren erhitzt bei 85° bis 90°C und dann eine Stunde bei 120°Cgehalten. Anschließend wird im Vakuum an einem Dünnschichtverdampfer das Lösungsmittel abdestilliert und das erhaltene Harz (Glasübergangstemperatur > 40°C) danach mit einem geeigneten Aggregat auf eine Größe von ca. 5 mm zerkleinert.

B. Zu 453 g einer Lösung eines Reaktionsproduktes aus 3 Mol Isophorondiisocyanat mit 1 Mol Trimethylolpropan (75 % in Ethylacetat) werden langsam bei 70°C unter Rühren 160 g Caprolactam zugefügt. Die Reaktionsmischung wird danach bei 70°C gehalten, bis der NCO-Gehalt auf null gesunken ist. Anschließend wird im Vakuum an einem Dünnschichtverdampfer das Lösungsmittel abdestilliert und das erhaltene Harz (Glasübergangstemperatur > 40°C) danach mit einem geeigneten Aggregat auf eine Größe von ca. 5 mm zerkleinert.

Die erhaltenen Harze nach A. und B. werden im Verhältnis 8:2 (Festkörper) gemischt.

**Pigmentpastenbeispiel 2 :**

A. 950 g eines Epoxidharzes auf Basis Bisphenol A (2 Epoxyäquivalente) werden in 633 g Xylol gelöst und bei 60 bis 70°C einem Gemisch aus 129 g 2-Ethylhexylamin und 117 g Diethylaminopropylamin zugegeben. Die Temperatur wird unter 75°C gehalten. Nach vollständigem Verbrauch aller Epoxygruppen werden 59 g Paraformaldehyd (91 %) zugegeben. Die Mischung wird erwärmt, bis das Reaktionswasser azeotrop entfernt wird.

Danach wird das Xylol im Ansatz abdestilliert und das Bindemittel nach Zugabe von 780 mmol Essigsäure/100 g Festharz mit deionisiertem Wasser auf einen Festkörper von 30 % verdünnt.

B. Zu 53 g des Pastenharzes A. (30 % in Wasser) werden unter einem schnellaufenden Rührer 143 g eines handelsüblichen Aluminiumsilikatpulvers, 10 g Ruß, 16 g pyrogene Kieselsäure und 8 g Dibutylzinnoxidpulver gegeben. Mit 115 g vollentsalztem Wasser wird auf ca. 44 % Festkörper eingestellt und auf einer Perlmühle vermahlen. Es entsteht eine stabile Pigmentpaste.

**Pigmentpastenbeispiel 3 :**

Es werden 125 g eines handelsüblichen n-Butanol veretherten Melamin/Formaldehydharzes (Festkörper 75 % in Butanol, Viskosität 6500 - 6800 mPas) mit 24 g Dibutylzinnoxid, 5 g Ruß, 160 g Titandioxid und 35 g Butoxyethanol vermischt und auf einer geeigneten Mühle auf eine Kornfeinheit < 5 $\mu$m vermahlen.

**Lackbeispiel 4 :**

Es wird Harzpulver nach Beispiel 1 zusammen mit 0,3 % Dibutylzinndilaurat vermischt und auf einer geeigneten Mühle auf eine Kornfeinheit < 25 $\mu$m vermahlen.

Zu 1000 g vollentsalztem Wasser werden 7,0 g eines handelsüblichen Netzmittels (50 %) und 5,5 g Ameisensäure (50 %) gegeben. Unter Rühren werden 150 g des beschriebenen Bindemittelpulvers gegeben. Das Bad wird mit vollentsalztem Wasser auf 2000 g aufgefüllt. Das Bad wird für 15 min auf ca. 60°C erhitzt und dabei gerührt. Es bleibt stabil und fällt nicht aus.

In dem Bad werden Stahlbleche bei 30°C und bei 70°C beschichtet und das Substrat mit Wasser abgespült. Das abgeschiedene Material haftet gut. Nach dem Einbrennen erhält man Filme mit guter Oberfläche und einer Schichtdicke von ca. 25 $\mu$m und 20 $\mu$m.

**Lackbeispiel 5 :**

A. Zu 500 g der Bindemittelmischung nach Beispiel 1 werden 10 g Dibutylzinnoxid, 3 g Oxalsäure; 7 g Ruß und 30 g Titandioxid gegeben und auf geeigneten Aggregaten homogen vermischt und dann auf eine Korngröße <40 $\mu$m vermahlen.

B. Zu 1000 g vollentsalztem Wasser werden 7,5 g Netzmittel (50 %) gegeben und dann unter intensivem Rühren 120 g des Pulvers nach A. Das Bad wird 30 min auf 70°C erwärmt und ist dann beschichtungsfähig. Die Bleche werden bei 30° und bei 55°C beschichtet, abgespült und dann 30 min bei 180°C eingebrannt. Die Filme haben eine Schichtdicke zwischen 20 und 30 $\mu$m und eine gute Oberfläche.

**Lackbeispiel 6 :**

Es wird ein Klarlack aus 5 g Netzmittel, 7,5 g Ameisensäure, 1000 g Wasser und 150 g Harzpulver nach Beispiel 1 (vermahlen auf ca. 30 $\mu$m) hergestellt. Der Lack wird mit Wasser auf 2000 g aufgefüllt. Dazu werden 60 g handelsübliches Verlaufsmittel/Butylglykol (1:1) gegeben und 132 g einer Pigmentpaste nach Beispiel 2. Der Lack wird auf 60°C erhitzt und nach dem Abkühlen beschichtet.

**Lackbeispiel 7 :**

Es wird ein Klarlack aus 5 g Netzmittel, 7,5 g Ameisensäure, 1000 g Wasser und 150 g Harzpulver nach Beispiel 1 (vermahlen auf ca. 10 $\mu$m) hergestellt. Dazu werden unter intensivem Rühren 45 g einer Pigmentpaste nach Beispiel 3 zugemischt und der Lack dabei auf 60°C erhitzt. Der Lack wird mit 1000 g vollentsalztem Wasser verdünnt und kann nach dem Abkühlen beschichtet werden.

**Lackbeispiel 8:**

A. Zu 500 g der Bindemittelmischung nach Beispiel 1 werden 10 g Dibutylzinnoxid, 21 g Sulfamidsäure, 7 g Ruß und 30 g Titandioxid gegeben und auf geeigneten Aggregaten homogen vermischt und dann auf eine Korngröße < 40 $\mu$m vermahlen.

B. Zu 1000 g vollentsalztem Wasser werden 7,5 g Netzmittel (50 %) gegeben und dann unter intensivem Rühren 120 g des Pulvers nach A. Das Bad wird 30 min auf 70°C erwärmt und ist dann beschichtungsfähig. Die Bleche werden bei 30° und bei 55°C beschichtet, abgespült und dann 30 min bei 180°C eingebrannt. Die Filme haben eine Schichtdicke zwischen 20 und 30 $\mu$m und eine gute Oberfläche.

**Patentansprüche**

1. Wäßrige Dispersion eines kathodisch abscheidbaren, wärmehärtbaren, kationischen filmbildenden Bindemittels,

**dadurch gekennzeichnet**,

daß sie hergestellt wurde durch Erwärmen einer Aufschlämmung des als Pulver mit einer Teilchengröße von 0,1 bis 1000 μm und mit einer Glasübergangstemperatur von 35 bis 130°C eingesetzten Bindemittels

a) in Wasser, falls das Bindemittel kationische Gruppen enthält, oder

b) in Wasser und Säure, falls das Bindemittel kationische und/oder basische Gruppen enthält,

auf eine Temperatur von 40 bis 90°C, während 5 Minuten bis 5 Stunden.

2. Dispersion nach Anspruch 1, dadurch gekennzeichnet, daß das eingesetzte pulverförmige Bindemittel an der Oberfläche mit nichtklebenden organischen oder anorganischen Additiven behandelt wurde.

3. Dispersion nach Anspruch 1 oder 2, dadurch gekennzeichnet, daß das Bindemittel aus einem Gemisch von Bindemitteln, aus einem oder mehreren selbstvernetzenden Harzen und/oder aus einem Gemisch aus einem oder mehreren fremdvernetzenden Harzen mit einem oder mehreren Härtern besteht.

4. Dispersion nach Anspruch 1, 2 oder 3, dadurch gekennzeichnet, daß das pulverförmige Bindemittel aus Lösungen üblicher kathodisch abscheidbarer Bindemittel in organischen Lösemitteln durch Entfernen der Lösemittel und anschließendes Pulverisieren hergestellt wurde.

5. Dispersion nach Anspruch 1, 2, 3 oder 4, dadurch gekennzeichnet, daß das pulverförmige Bindemittel eine OH-Zahl von 50 bis 400 mg/g KOH hat und eine Aminzahl von 45 bis 120 mg/g KOH, bedingt durch primäre, sekundäre, tert. Aminogruppen oder quartäre Stickstoffatome, aufweist, oder statt der Aminogruppen eine der Aminzahl äquivalente Menge an quartären Phosphoratomen und/oder tert. Schwefelatomen aufweist, sowie eine zur Vernetzung ausreichende Menge von mit OH- oder NH-reaktiven funktionellen Gruppen besitzt.

6. Dispersion nach einem der Ansprüche 1 bis 5, dadurch gekennzeichnet, daß das Bindemittelpulver feste und/oder flüssige Säure enthält.

7. Dispersion nach einem der Ansprüche 1 bis 6, dadurch gekennzeichnet, daß das zur Herstellung verwendete Wasser übliche in kathodisch abscheidbaren Bädern vorhandene Zusätze enthält und/oder nach der Dispergierung des Pulvers damit versetzt wird.

8. Dispersion nach Anspruch 7, dadurch gekennzeichnet, daß das zur Herstellung verwendete Wasser folgende Zusätze enthält und/oder nach der Dispergierung des Pulvers damit versetzt wird:

| | |
|---|---|
| Füllstoffe und/oder Pigmente | 0 bis 60 Gewichtsteile |
| Katalysatoren und/oder Säure Pastenharz zum Anreiben von Füllstoffen, | 0 bis 10 Gewichtsteile |
| Pigmenten und/oder Katalysatoren | 0 bis 20 Gewichtsteile |
| Additive und/oder Lösungsmittel | 0 bis 10 Gewichtsteile |

jeweils bezogen auf 100 Gewichtsteile Bindemittelpulver;

wobei das Bindemittelpulver und die Zusätze in einer solchen Menge zugesetzt werden, bzw. vorhanden sind, daß der Gesamtfestkörpergehalt der Dispersion bei 5 bis 30 Gew.% liegt.

9. Dispersion nach einem der Ansprüche 1 bis 8, dadurch gekennzeichnet, daß das zur Herstellung verwendete Wasser ein kathodisch abscheidbares Bad ist, das zur Regenerierung mit dem Bindemittelpulver versetzt wird.

10. Dispersion nach Anspruch 9, dadurch gekennzeichnet, daß die ursprüngliche Zusammensetzung des zu regenerierenden Bades der Zusammensetzung der Dispersion nach Anspruch 8 entspricht.

11. Dispersion nach einem der Ansprüche 8 bis 10, dadurch gekennzeichnet, daß es sich bei den Additiven um Netzmittel, Verlaufsmittel und/oder Antischaummittel handelt.

12. Verfahren zur Herstellung einer wäßrigen Dispersion eines kathodisch abscheidbaren, kationischen, wärmehärtbaren filmbildenden Bindemittels, dadurch gekennzeichnet, daß man ein Bindemittel-Pulver mit einer Teilchengröße von 0,1 bis 1000 $\mu$m und mit einer Glasübergangstemperatur von 35 bis 130°C

    a) in Wasser, falls das Bindemittel kationische Gruppen enthält, oder

    b) in Wasser und Säure, falls das Bindemittel kationische und/oder basische Gruppen enthält,

aufschlämmt und auf eine Temperatur von 40 bis 90°C, während 5 Minuten bis 5 Stunden erwärmt.

13. Verfahren nach Anspruch 12, dadurch gekennzeichnet, daß man ein pulverförmiges Bindemittel einsetzt, das an der Oberfläche mit nicht-klebenden organischen oder anorganischen Additiven behandelt wurde.

14. Verfahren nach Anspruch 12 oder 13, dadurch gekennzeichnet, daß das Bindemittel aus einem selbstvernetzenden Harz oder aus einem Harz/Härter-Gemisch- besteht.

15. Verfahren nach Anspruch 12, 13 oder 14, dadurch gekennzeichnet, daß das pulverförmige Bindemittel aus Lösungen üblicher kathodisch abscheidbarer Bindemittel in organischen Lösemitteln durch Entfernen der Lösemittel und anschließendes Pulverisieren hergestellt wurde.

16. Verfahren nach Anspruch 12, 13, 14 oder 15, dadurch gekennzeichnet, daß das pulverförmige Bindemittel eine OH-Zahl von 50 bis 400 mg/g KOH hat und eine Aminzahl von 45 bis 120 mg/g KOH, bedingt durch primäre, sekundäre, tert. Aminogruppen oder quartäre Stickstoffatome, aufweist, oder statt der Aminogruppen eine der Aminzahl äquivalente Menge an quartären Phosphoratomen und/oder tert. Schwefelatomen aufweist, sowie eine zur Vernetzung ausreichende Menge von mit OH- oder NH-reaktiven funktionellen Gruppen besitzt.

17. Verfahren nach einem der Ansprüche 12 bis 16, dadurch gekennzeichnet, daß das Bindemittelpulver feste und/oder flüssige Säure enthält.

18. Verfahren nach einem der Ansprüche 12 bis 17, dadurch gekennzeichnet, daß das zur Herstellung verwendete Wasser übliche in kathodisch abscheidbaren Bädern vorhandene Zusätze enthält und/oder nach der Dispergierung des Pulvers damit versetzt wird.

19. Verfahren nach Anspruch 18, dadurch gekennzeichnet, daß das zur Herstellung verwendete Wasser folgende Zusätze enthält und/oder nach der Dispergierung des Pulvers damit versetzt wird:

| | |
|---|---|
| Füllstoffe und/oder Pigmente | 0 bis 60 Gewichtsteile |
| Katalysatoren und/oder Säure Pastenharz zum Anreiben von Füllstoffen, | 0 bis 10 Gewichtsteile |
| Pigmenten und/oder Katalysatoren | 0 bis 20 Gewichtsteile |
| Additive und/oder Lösungsmittel | 0 bis 10 Gewichtsteile |

jeweils bezogen auf 100 Gewichtsteile Bindemittelpulver;

wobei das Bindemittelpulver und die Zusätze in einer solchen Menge zugesetzt werden, bzw. vorhanden sind, daß der Gesamtfestkörpergehalt der Dispersion bei 5 bis 30 Gew.% liegt.

20. Verfahren nach einem der Ansprüche 12 bis 19, dadurch gekennzeichnet, daß das zur Herstellung verwendete Wasser ein verbrauchtes kathodisch abscheidbares Bad ist, das zur Regenerierung mit dem Bindemittelpulver versetzt wird.

21. Verfahren nach Anspruch 20, dadurch gekennzeichnet, daß die ursprüngliche Zusammensetzung des verbrauchten Bades der Zusammensetzung der Dispersion nach Anpruch 8 entspricht.

22. Verfahren nach einem der Ansprüche 19 bis 21, dadurch gekennzeichnet, daß es sich bei den Additiven um Netzmittel, Verlaufsmittel und/oder Antischaummittel handelt.

23. Verfahren nach einem der Ansprüche 12 bis 17, dadurch gekennzeichnet, daß das Bindemittelpulver dispergierte Füllstoffe, Pigmente und/oder Katalysatoren enthält.

24. Dispersion nach einem der Ansprüche 1 bis 6, dadurch gekennzeichnet, daß das Bindemittelpulver dispergierte Füllstoffe, Pigmente und/oder Katalysatoren enthält.

25. Verwendung der wäßrigen Dispersionen nach einem der Ansprüche 1 bis 11 und 24 zur kathodischen Elektrotauchlackierung.

26. Verwendung nach Anspruch 25 zur Grundierung von elektrisch leitenden Kraftfahrzeugteilen.

27. Substrat mit einer Beschichtung erhalten gemäß Verwendung nach einem der Ansprüche 25 oder 26.

28. Verfahren zur Elektrotauchlackierung von Substraten, dadurch gekennzeichnet, daß man ein Elektrotauchbad verwendet, das eine wäßrige Dispersion nach einem der Ansprüche 1 bis 11 oder 27, oder eine wäßrige Dispersion, hergestellt nach einem der Ansprüche 12 bis 23, enthält, und daß man die Elektrotauchlackierung bei einer Temperatur von 30 bis 60°C durchführt.